# EUROPEAN PATENT APPLICATION

(11) **EP 4 641 405 A1**
(43) Date of publication of application: **29.10.2025**
(21) Application number: 25172409.2
(22) Date of filing: 24.04.2025
(51) Int. Cl.: G06F 16/36, G06F 40/20, G06N 5/02, G06N 5/022, G06N 20/00, G06Q 10/20

(54) **DIGITAL STRUCTURAL DAMAGE DECISION SUPPORT**

(30) Priority: 26.04.2024 US 202418648029
(71) Applicant: The Boeing Company, Arlington, VA 22202 (US)
(72) Inventor: MUNJAL, Vikas, ARLINGTON, 22202 (US); MATHUR, Ankita, ARLINGTON, 22202 (US); CHOPRA, Seema, ARLINGTON, 22202 (US); LECLAIR, David J, ARLINGTON, 22202 (US); GLINIAK, Doug, ARLINGTON, 22202 (US); SONKER, Ashutosh, ARLINGTON, 22202 (US); BHUSHAN, Bharat, ARLINGTON, 22202 (US); VITTAL SHETTY, Adarsh, ARLINGTON, 22202 (US)
(74) Representative: Plasseraud IP

(57) **Abstract**

Aspects herein use a Digital SRM (DSRM) with a maintenance user interface. In one embodiment, the DSRM is a Knowledge Graph (KG) of nodes and edges which uses natural language processing (NLP) and image processing to retrieve relevant information derived from SRM PDF documents. In the KG, Entity descriptions contribute to one another, forming a network, where each entity represents part of the description of the entities in which each entity is related. The entities have properties describing each entity and each entity is interlinked via relationships such as allowable damage limits (ADL).

## Description

### FIELD

Aspects of the present disclosure relate to digitizing the structural repair manual using Knowledge Graphs (KG) and providing a quick lookup of allowable damage/repair limits of aircraft damage.

### BACKGROUND

The first two hours after a flight lands are crucial to timely operation of airlines. The Aircraft Maintenance Engineer (AME) often inspects the aircraft for structural damages and if the damage is detected, whether the damage is within allowable damage limits (ADL)/repairable damage limits (RDL) and make necessary action. In order to perform this task, the engineer needs to look into a Structural Repair Manual (SRM) for the ADL/RDL and perform specific actions based on this information. As aircrafts are becoming more and more complex, the SRM has become an extensive document consisting of thousands of pages and as such, looking for ADLs and specific repairs has become a tedious task.

The SRM is a portable document format (PDF) document which can be thought of as "modern paper". The SRM includes bookmarks to look up the larger structure in which the damaged part may belong. The AME needs to look up hundreds of pages from a section to find the relevant information using the tables and figures. This information is often not present on the same PDF documents so the AME may have to go back and forth between various chapters and sections of the SRM in order to arrive at the applicable data. The AME must then check a series of conditions to make sure she arrives at a correct conclusion. This whole manual process is time consuming and requires considerable effort to consolidate the required data.

### SUMMARY

The present disclosure provides, in different aspects, methods, computing devices or computer readable storage media as per the appended claims.

### BRIEF DESCRIPTION OF THE DRAWINGS

So that the manner in which the above recited features can be understood in detail, a more particular description, briefly summarized above, may be had by reference to example aspects, some of which are illustrated in the appended drawings. It is to be noted, however, that the appended drawings illustrate typical aspects and are therefore not to be considered limiting; other equally effective aspects are contemplated.
Figure 1 depicts a system for a computing device configured to perform various aspects of the present disclosure, according to one aspect.
Figure 2 is a flowchart of a method for processing information regarding damage, according to one aspect.
Figure 3 depicts an example maintenance user interface configured to perform various aspects of the present disclosure, according to one aspect.
Figure 4 illustrates a Knowledge Graph schema, according to one aspect.
Figure 5 depicts an example Knowledge Graph configured to perform various aspects of the present disclosure, according to one aspect.
Figure 6 is a flowchart of a method for indicating the allowable damage limits, according to one aspect.
Figure 7 is a flowchart of a method for processing information regarding damage, according to one aspect.
Figure 8 is a flowchart for creating a Knowledge Graph, according to one aspect.

To facilitate understanding, identical reference numerals have been used, where possible, to designate identical elements that are common to the figures. It is contemplated that elements disclosed in one aspect may be beneficially used in other aspects without specific recitation.

### DETAILED DESCRIPTION

Aspects herein describe a Digital SRM (DSRM) that is integrated with a web-based application with a maintenance user interface. In one aspect, the DSRM is a Knowledge Graph (KG) of nodes and edges which uses natural language processing (NLP) and image processing to retrieve relevant information derived from SRM PDF documents. The KG is a collection of interlinked entities where entity descriptions are clear so that humans and computers both can understand. Entity descriptions contribute to one another, forming a network, where each entity represents part of the description of the entities in which each entity is related. The entities have properties describing each entity and each entity is interlinked via "relationships" such as allowable damage limits (ADL).

A technical advantage of the subject disclosure is the ability to use a plot location associated with a damage instance, where the plot location is tied to the three-dimensional model of the aircraft. The systems and methods can display required input values and process the inputs to search a digital SRM, making it easier, faster and possible to retrieve all the relevant information.

Another technical advantage of the subject disclosure is that it enables flight crews, mechanics and engineers-who are required to inspect aircraft for structural damages after each flight to determine if there is new damage and to efficiently ensure the damage is within ADL. For example, the systems and methods disclosed herein can include the zones and areas related to allowable damage/repair limits. By automatically identifying maintenance conditions based on input data, the three-dimensional model, and a KG, the systems and methods disclosed herein can efficiently generate a damage disposition based on the input data and damage limits retrieved from the digital SRM without the need to review thousands of pages of SRM.

The figures and the following description illustrate specific exemplary aspects. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific aspects or examples described below, but by the claims and their equivalents.

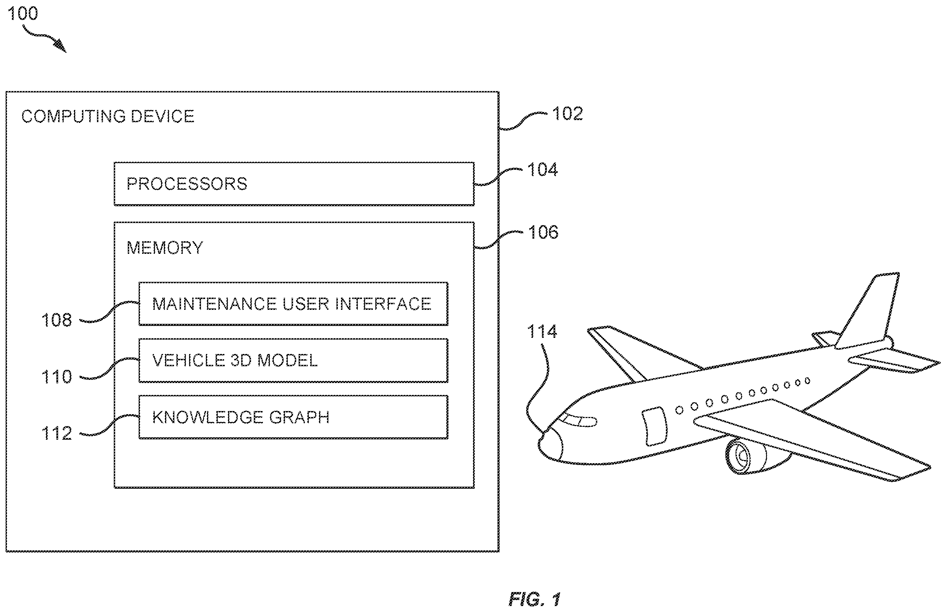

Figure 1 depicts a system 100 for a computing device 102 configured to perform various aspects of the present disclosure, according to one aspect. The computing device 102 is further configured to communicate with one or more devices. Although depicted as a physical device, in aspects, the computing device may be implemented using virtual device(s), and/or across a number of devices (e.g., in a cloud environment).

In some implementations, the device(s) can include, correspond to, or be included within a smartphone, tablet, or other handheld electronic device used by aircraft maintenance personnel. For example, aircraft maintenance personnel in an airport gate environment can use a smartphone equipped with a camera to take a picture of external damage to an aircraft in the gate environment, record and/or enter information about the aircraft itself, the damage type, the damage size, etc.

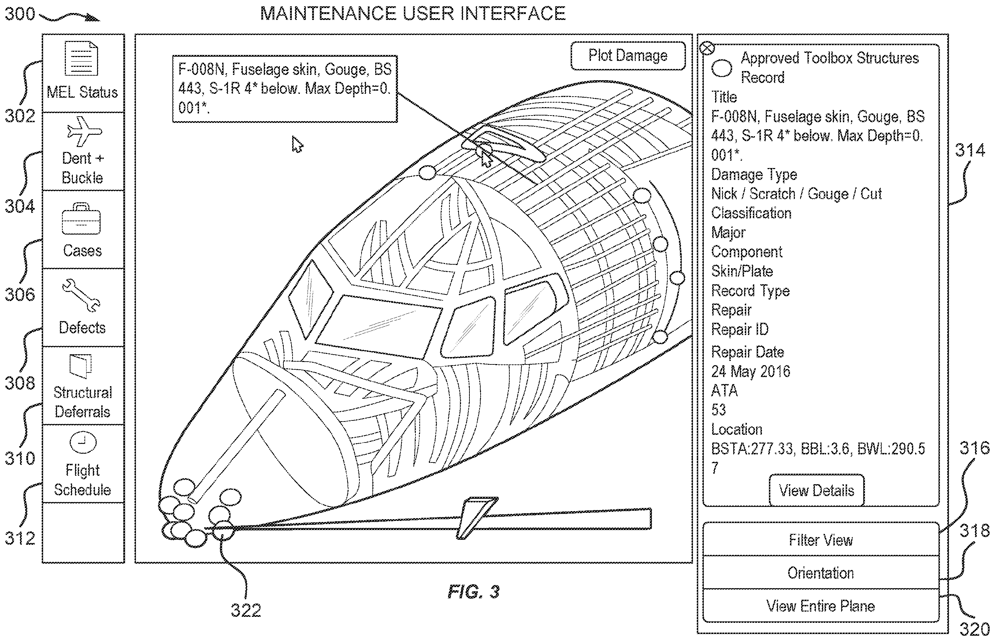

As illustrated, the computing device 102 includes a processor 104, memory 106, and damage information 114. In the illustrated aspect, the memory 106 includes a maintenance user interface 108, a vehicle 3D model 110, and a KG 112. The user inputs the damage information 114 into the maintenance user interface 108 on the vehicle 3D model 110. One example of the maintenance user interface 108 (e.g., a graphical user interface (GUI)) will be described in Figure 3. The vehicle 3D model 110 is generated on the maintenance user interface 108 with typical structural components of the plane.

In one aspect, the maintenance user interface 108 displays detailed structural information based on the plotted damage information 114. The damage information 114 can include data associated with a type of damage, an extent of damage, or some combination thereof. For example, the damage information 114 can indicate whether a particular instance of damage to the particular aircraft is surface damage (e.g., nick, gouge, scratch, etc.), a dent, crack (e.g., broken fiber), hole, delamination disbond, heat damage, lightning strike away from a fastener, lightning strike at a fastener, etc. The damage information 114 can also indicate one or more physical dimensions associated with the damage (e.g., depth, length, width, area, etc.).

The structural information displayed in the maintenance user interface 108 includes repair instructions, include aircraft data and aircraft location data. The aircraft data can include information identifying the particular aircraft type, manufacturer, model, tail number, etc. The aircraft location data can include data associated with a position on the particular aircraft where damage is located. For example, the aircraft location data can indicate a part number, position coordinates, one or more other identifiers associated with a location on the particular aircraft, or some combination thereof, which is further explained in Figure 3.

A digital SRM (DSRM) generates the repair instructions using extracted PDF documents used to create the KG 112. The DSRM can include, correspond to, or be included within an electronic device that includes a memory storing one or more damage limits. The damage limit(s) can include one or more values indicating whether a particular damage instance can be corrected in a particular environment when certain conditions are met. For example, the damage limit(s) can indicate allowable damage limit(s) that indicate whether the aircraft can continue in operation without correcting the damage instance. The damage limit(s) can also indicate repairable damage limit(s) that indicate whether the damage instance can be repaired within certain parameters (e.g., in a certain amount of time, within the gate environment, etc.). The damage may be repaired based on repair instructions generated by the DSRM.

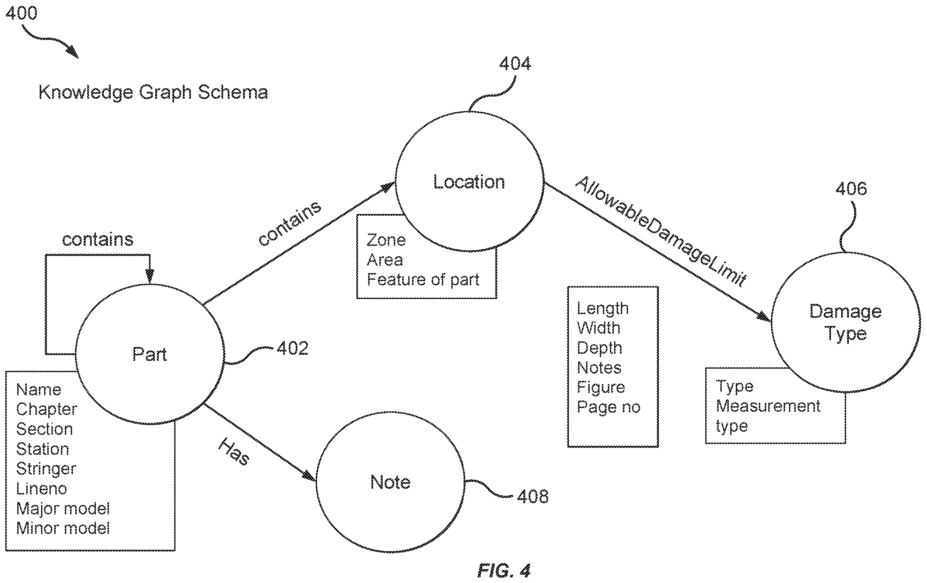

In some aspects, the damage limit(s) can be associated with a broader content of information regarding a particular aircraft type for a particular DSRM. For example, the digital service manual can include information about the damage limit(s), as well as the various conditions that should be met in order for those damage limits to apply. The KG 112 is a graph of nodes of the structure of the plane. The nodes each have relationships that create the KG 112, which is further explained in Figure 4.

The computing device 102 can also be configured to enable improved inventory management for an aircraft operator. For example, an operator can analyze maintenance dispositions associated with one or more aircraft over a period of time to determine if a particular damage type is more common than other damage types. To illustrate, an aircraft operator can determine that lightning strikes to a particular portion of the aircraft are more common for some aircraft that fly particular routes than for other aircraft. The operator can then modify material inventory levels to account for the more common damage type. For example, the operator can maintain higher inventory levels of a particular fastener, a particular material, etc. needed to repair damage due to a lightning strike. The computing device 102 can also be configured to enable other analytical tools to, for example, analyze fleet-wide damage statistics to improve aircraft construction or design. One or more components to perform such operations can be incorporated into the system 100, part of another system, or some combination thereof.

Additionally, although Figure 1 illustrates certain operations occurring within the computing device 102, these operations can be performed by other components of the system 100 without departing from the scope of the subject disclosure.

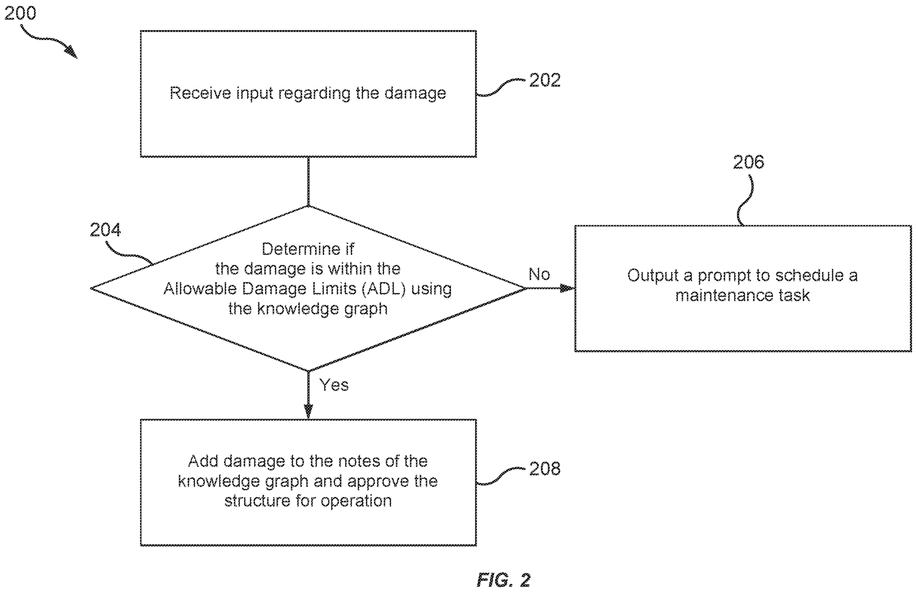

Figure 2 is a flowchart of a method 200 for processing information regarding damage, according to one aspect. After a plane has landed a user or maintenance personnel checks a plane for any damage that may have occur during the flight. If the user finds any damage, then the user determines if the found damage is in the allowable damage limits (ADL). The user uses the KG, such as the KG 112 of Figure 1 opposed to the previous approach of using the SRM.

The method 200 begins at block 202 where the user maintenance interface receives input regarding the damage, such as damage information 114 of Figure 1. At block 204, the KG determines whether the damage is within the allowable damage limits (ADL). If the KG determines that the damage is not within the ADL, then the method 200 proceeds to block 206. At block 206, the maintenance user interface, such as the maintenance user interface 108 of Figure 1, outputs a prompt to schedule a maintenance task. If the KG determines that the damage is within the ADL, then the method 200 proceeds to block 208 where the damage is added to the notes of the KG and the structure is approved for operation.

The user saves time using the KG to determine if any found damage is within the ADL. The KG allows the user to quickly find the ADL information of the damaged structure on the maintenance user interface using the multiple layered vehicle 3D model, such as the vehicle 3D model 110 of Figure 1, as further discussed in Figure 3. For example, there may at least 6 3D layers displaying different structural details. The layers can be toggled on and off by the user based on preference. The ADL information displayed from the KG creates a seamless process to complete damage analysis of the plane.

Figure 3 depicts an example maintenance user interface 300 (e.g., a GUI) configured to perform various aspects of the present disclosure, according to one aspect. The maintenance user interface 300 displays a MEL (Minimum Equipment List) status selectable virtual button 302, a dent & buckle selectable virtual button 304, a cases selectable virtual button 306, a defects selectable virtual button 308, a structural deferrals selectable virtual button 310, a flight schedule selectable virtual button 312, a view details selectable virtual button 314, a filter view selectable virtual button 316, an orientation selectable virtual button 318, and a view entire plane selectable virtual button 320. The maintenance user interface 300, such as the maintenance user interface 108 of Figure 1, automates the user's role in expediting aircraft turns (return to operation). The maintenance user interface 300 has intuitive features to locate damage on vehicle 3D model, such as the vehicle 3D model 110 of Figure 1, document damage, and manage aircraft events.

As a user walks around a plane to look for damages (lightning strikes, cracks, scratches, debris, etc.) the user plots damage information, such as the damage information 114 of Figure 1, on the maintenance user interface 108. More specifically, the damage points from the damage information is plotted on the vehicle 3D model, such as the vehicle 3D model 110 of Figure. Each damage point has a personalized ADL that is displayed on the vehicle 3D model, which allows a user to plot damage points. As illustrated, the spheres or damage points on the 3D model of the aircraft in Figure 3 are depictions of damaged areas that are specific to the structure of a plane.

For example, a user plots a damage point 322 of a 2 inch scratch on the side of the plane on the vehicle 3D model. The KG computes the ADL for that specific structure where the damage point 322 is located. The maintenance user interface populates the ADL from the KG of the damage point 322. Based on the ADL for that specific location, the user avoids going through hundreds of pages trying to find the ADL for the damage point 322 on the structure. The user reads the ADL pertaining to the damage point 322 and determines if the 2 inch scratch is within the ADL. Depending on the ADL the user knows whether the damage pertaining to the damage point 322 can be fixed or if the damage needs to be flagged. The user makes this determination with consideration of the notes that can be found in the view details selectable virtual button 314. For example, a note can indicate that the damage point 322 must be at less six inches away from any other damage in order for the damage limits to apply.

The vehicle 3D model can have at least 6 layers to plot damage points. Each of the at least 6 layers can be toggled on an off to be viewed simultaneously. Based on the damage that is plotted, the user has the option on the maintenance user interface to select which vehicle 3D model most applicable to plot the damage points. Users plot the damage points on vehicle 3D model and then automatically gives disposition with the use of the KG of whether the given damage is within the ADL or not. Furthermore, the maintenance user interface can suggest or display a specific repair solution for the damage on the same screen as the vehicle 3D model.

Figure 4 illustrates a KG schema 400, according to one aspect. The KG schema 400 includes a plurality of nodes that includes part 402, location 404, damage type 406, and note 408. In this example, the information of the part 402 at least includes name, chapter, section, station, stringer, line number (lineno), major model, and minor model. Each part 402 contains location 404 information. The location 404 information can at least include the zone, the area, and feature of the part 402. Each location 404 of each part 402 have an ADL for each damage type 406. The ADL can at least include length, width, and notes. The damage type 406 can at least include type of damage and measurement type.

Furthermore, each part 402 has a note 408 or plurality of notes. The note 408 for each part 402 can at least include information about damage and other factors to consider. The note 408 describes relationships between damage types 406. Other factors can include previously plotted damage points.

For example, assume a previous damage point is plotted indicating there is a 3 inch scratch which again assume is within the ADL of 4 inches. Later, a new damage point is plotted in the same area in which the previous damage point was plotted. The new damage point though is 5 inches, which is not within the 4 inch ADL, as shown in the view details selectable virtual button 314 of Figure 3. The note 408 can display the details of the ADL and how the 5 inch scratch is not in the 4 inch ADL. The KG 400 can provide this information to the maintenance user interface which then outputs a prompt to the user to schedule a maintenance task. This output, as well as the ability to schedule the maintenance task, can be provided by the maintenance user interface 300 shown in Figure 3.

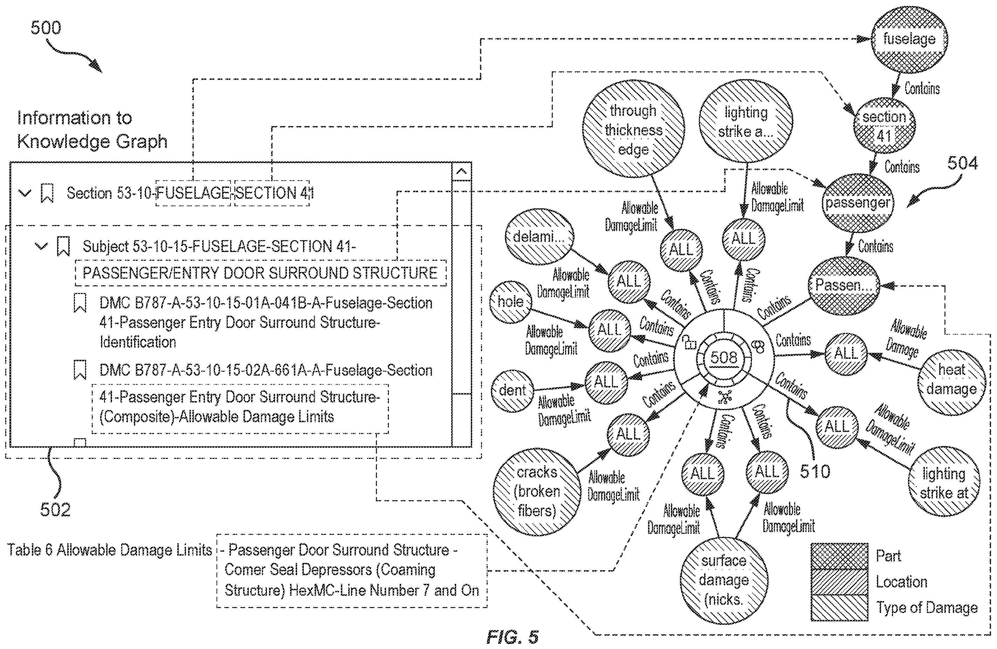

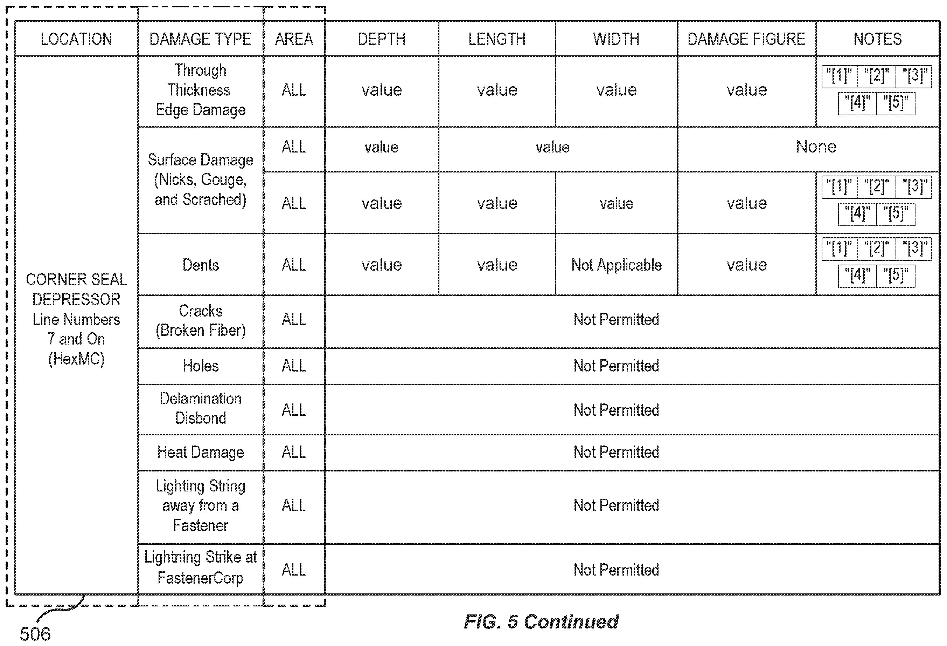

Figure 5 depicts a system 500 for a KG 504 configured to perform various aspects of the present disclosure, according to one aspect. The system 500 allows a KG 504, such as KG 112 of Figure 1 to be constructed and updated in the background of the maintenance user interface, such as the maintenance user interface 108 of Figure 1. The KG 504 is a collection of information in a graphical format where various entities and their relationships (with parameters) can be learned, defined, and queried easily. The maintenance user interface with vehicle 3D models, such as the vehicle 3D model 110 of Figure 1 allows the user to plot damage points and enter damage dimension. The interface between the maintenance user interface and the vehicle 3D model allows them to interact with each other.

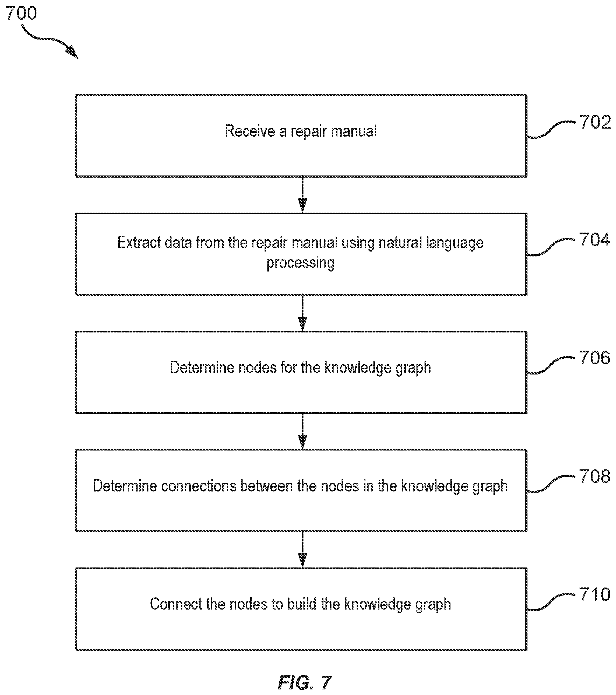

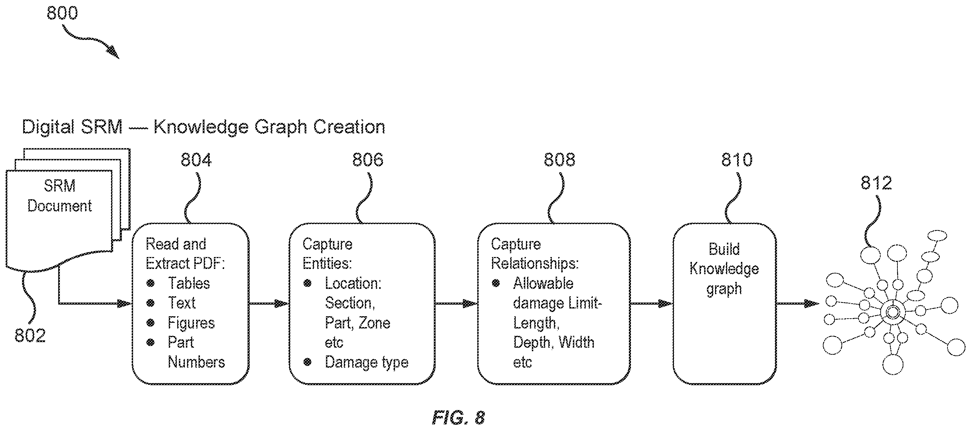

The KG 504 is one implementation of a DSRM. The information that is extracted from the organization schema 502 of SRM create the KG 504. The extracted PDF documents of the organization schema 502 refers to the structure information of a plane. The KG 504 is comprised of a plurality of nodes. As discussed in more detail in Figures 7 and 8, the extracted PDF documents of the organization schema 502 are utilized to create the plurality of nodes forming the KG 504. The information in the PDF documents of the organization schema 502 can also be used to populate the ADL information 506 that pertains to each node of the plurality of nodes.

The system 500 can be organized according to exemplary organization schema 502, which narrows from a part number for a particular aircraft to a subsequent section of the part number to one or more subsections of the section. The content associated with the subsection can include the ADL information 506 illustrating allowable damage limits for a particular portion of an aircraft, where the allowable damage limits are based on a damage type, the particular portion of the aircraft, and the damage area.

In the particular example of FIG. 5, the ADL information 506 describes a number of allowable damage limits for the corner seal depressor (exemplary portion) of the passenger entry door surround structure (composite) (exemplary subsection) of the passenger-entry door surround structure (exemplary section 208) of the fuselage section (part number). The ADL information 506 illustrates that a dent (e.g., damage type) in the particular portion (in this example the corner seal depressor) has allowable damage limits corresponding to maximum dimensions of value for length damage limit, a value for width damage limit, and a value for depth damage limit. The KG can also include a damage figure illustrating the damage type, dimensions for damage limits, etc. The KG can also further include one or more notes associated with a particular maintenance issue. The note(s) can indicate additional information associated with the KG, as described in more detail above with reference to Figure 3. For example, a note can indicate that a particular damage instance must be at less six inches away from any other damage in order for the damage limits to apply. That is, both damage instance may separately be within the ADL. However, when considered together, they may exceed the ADL because they violate the proximity requirements of the ADL (e.g., the two damaged areas are too close together). In another example, a damage instance may have dimensions (e.g., width, length, and depth) that satisfy the ADL, but has a location on the plane that is too close to a particular component (e.g., a door handle or a seal) and thus, does not satisfy the ADL. The variations of the ADL can be stored in the notes portion of the KG.

Although FIG. 5 illustrates a specific exemplary system 500 from an SRM, other configurations, content, etc. of the SRM can be present without departing from the scope of the subject disclosure. For example, the SRM can illustrate maintenance conditions for a different type of aircraft, another portion of the same type of aircraft, be organized in a different manner, etc. Further, although no specific numbers are used in FIG. 5 to illustrate the exemplary allowable damage limits for this portion of the SRM, the allowable damage limits can be different for another type of aircraft, for a different portion of the same aircraft, for different materials used for the same portion of the same aircraft, allowable damage limits can change over time, etc.

In the KG 504, a node can be connected to one or more additional nodes through a connection that describes a relationship between the node(s). The relationship can be directional in that the relationship can indicate the direction in which data flows from node to node.

For example, the node 508 can be connected to a plurality of nodes, such as nodes (part 402, location 404, damage type 406, and note 408), of Figure 4, representing various maintenance areas related to the physical location on the aircraft where the Passenger Entry Door Surround Structure - Corner Seal Depressors is located. In the KG 504, each of the nodes are associated with all maintenance areas. In some aspects, the relationship between the plurality of nodes and the node 508 are illustrated via connections 510. In the example of FIG. 5, the connection 510 illustrates that the node 508 contains a plurality of nodes. In other aspects, the connection 510 can illustrate other kinds of relationships between the plurality of nodes and the node 508.

In this example, the ADL information 506 is specific to each node. When the user plots damage information, such as damage information 114 of Figure 1, the ADL information 506 associated with that specific damage area is used to determine whether the damage is within the ADL. Using the user maintenance interface the ADL information 506 (or whether the damage does or does not exceed the ADL) is displayed for the user to analyze. The ADL information 506 can include location, damage type, area, depth, length, width, damage figure, and notes. Each category of the ADL information 506 has a value if applicable to the node. Each node can be categorized by part, location, and damage type for user ease.

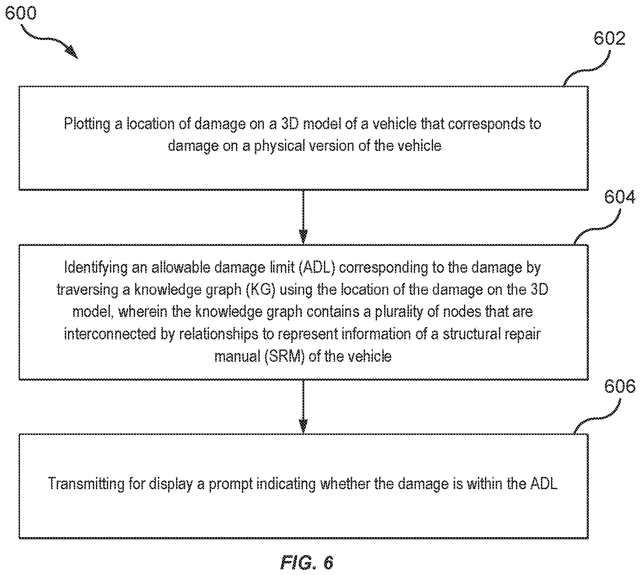

Figure 6 is a flowchart of a method for indicating the allowable damage limits, according to one aspect. The method 600 begins at block 602. At block 602, the user plots a location of a damage, such as damage point 322 of Figure 3, on a 3D model of a vehicle, such as vehicle 3D model 110 of Figure 1, that corresponds to damage on a physical version of the vehicle. For example the user sees a 3 inch scratch on the door of a plane. The user plots the 3 inch scratch on the 3D model of a vehicle that is displayed on the maintenance user interface 300 of Figure 3.

At block 604, the user identifies an ADL corresponding to the damage by traversing a KG, such as KG 504, using the location of the damage in the 3D model. The KG contains a plurality of nodes, such as nodes (part 402, location 404, damage type 406, and note 408) of Figure 4, that are interconnected by relationships, such as connection 510 of Figure 5, to represent information of an SRM of the vehicle. For example, following the plot of the damage, the KG populates the ADL for the plotted damage. The KG has a node for the front of the plane (part 402), a more specific node of the damage location (location 404), and an even more specific node for the 3 inch scratch (damage type 406). Each node in connected using relationships. Notes, such as note 408 of Figure 4, pertaining to the nose of the plan are included in the KG.

At block 606, a prompt is transmitted for display of whether the damage is within the ADL. For example, the KG cross references the 3 inch damage plotted on the 3D model with the ADL. The ADL displays a prompt to schedule a maintenance task if the 3 inch scratch is not within the ADL. The 3 inch scratch is added to the notes of the KG if the 3 inch scratch in within the ADL. The user is able to view the ADL on the maintenance user interface much quicker than what can be determined using pervious solutions.

Figure 7 is a flowchart of a method 700 for processing information regarding damage, according to one aspect. Processing damage information, such as damage information 114 of Figure 1 uses extracted PDF documents from a SRM. The extracted information is processed and configured into a KG, such as the KG 112 of Figure 1 or the KG 504 in Figure 5 to be used for airplane analysis after landing.

The method 700 begins at block 702. For ease of explanation, the blocks of the method 700 are discussed in parallel with Figure 8, which illustrates a flowchart of a method 800 for creating a KG 812, according to one aspect.

At block 702 the processor, such as the processor 104 of Figure 1, receives a repair manual. In one aspect, the repair manual is an SRM, as further described in Figure 8 where the method 800 begins with a SRM document 802. To create the KG 812, the SRM document 802 is processed to extract key information from the organization schema such as the organization schema 502 of Figure 5, using NLP.

At block 704, the processor extracts data from the repair manual using natural language processing (NLP) to convert the PDF into machine readable data. For example, at block 804 in Figure 8, NPL is used to extract key information from the SRM document (the repair manual) that includes but is not limited to tables, text, figures, and part numbers. The extracted data from the PDF documents is stored in the memory, such as the memory 106 of Figure 1.

At block 706, the processor determines nodes for the KG using the extracted data. At block 806 in Figure 8, nodes (entities) are created based on the extracted key information. The nodes may include the location such as a section, part, and zone of the structure along with damage types. Various examples of the nodes were discussed in Figures 4 and 5 above.

At block 708, the processor determines connections between the nodes in the KG using the extracted data. At block 808, the extracted data is used to build relationships that include at least ADL lengths, depth, and width as well as proximity limits between damages or special components (e.g., seals).

At block 710, the nodes are connected to build the KG. At block 810 of Figure 8, the KG 812 is created by combining the extracted key information to create the nodes which are connected by the relationships identified at block 808.

The methods 700 and 800 described technique for creating a KG 812, according to one aspect. The KG 812, such as KG 504 for Figure 5, allows for faster retrieval and question answering on a growing dataset. The KG 812 further allows for visual navigation, damage history, and drill down. Utilizing the KG 812 maximizes dispatch speed with minimum user input. Human interpretation error (human factors) is minimized. With the user avoiding looking through the previous SRM, there is a decreased opportunity for error. The KG 812 is further able to capture detailed damage characteristics and locations to be plotted on the vehicle 3D model, such as the vehicle 3D model 110 of Figure 1.

In the current disclosure, reference is made to various aspects. However, it should be understood that the present disclosure is not limited to specific described aspects. Instead, any combination of the following features and elements, whether related to different aspects or not, is contemplated to implement and practice the teachings provided herein. Additionally, when elements of the aspects are described in the form of "at least one of A and B," it will be understood that aspects including element A exclusively, including element B exclusively, and including element A and B are each contemplated. Furthermore, although some aspects may achieve advantages over other possible solutions and/or over the prior art, whether or not a particular advantage is achieved by a given aspect is not limiting of the present disclosure. Thus, the aspects, features, aspects and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, aspects described herein may be embodied as a system, method or computer program product. Accordingly, aspects may take the form of an entirely hardware aspect, an entirely software aspect (including firmware, resident software, micro-code, etc.) or an aspect combining software and hardware aspects that may all generally be referred to herein as a "circuit," "module" or "system." Furthermore, aspects described herein may take the form of a computer program product embodied in one or more computer readable storage medium(s) having computer readable program code embodied thereon.

Program code embodied on a computer readable storage medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to aspects of the present disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various aspects of the present disclosure. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order or out of order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

While the foregoing is directed to aspects of the present disclosure, other and further aspects of the disclosure may be devised without departing from the basic scope thereof, and the scope thereof is determined by the claims that follow.

## Claims

1. A method, comprising:
receiving (702) a repair manual for a vehicle;
extracting (704) data from the repair manual using natural language processing;
determining (706) nodes for a knowledge graph based on the extracted data;
determining (708) connections between the nodes based on the extracted data; and
connecting (710) the nodes to create the knowledge graph.

2. The method of claim 1, wherein the natural language processing comprises converting data in the Portable Document Format (PDF) of the repair manual into computer readable data.

3. A method, comprising:
plotting (602) a location of damage on a 3D model of a vehicle that corresponds to damage on a physical version of the vehicle;
identifying (604) an allowable damage limit (ADL) corresponding to the damage by traversing a knowledge graph using the location of the damage on the 3D model, wherein the knowledge graph (112, 400, 504) contains a plurality of nodes (402, 404, 406, 408) that are interconnected by relationships to represent information of a structural repair manual (SRM) of the vehicle; and
transmitting (606) for display a prompt indicating whether the damage is within the ADL.

4. The method of claim 3, wherein the 3D model and the prompt are generated using a maintenance user interface (108) implemented in a graphical user interface (GUI).

5. The method of claim 4, wherein the maintenance user interface outputs a suggested maintenance task to be performed based on the damage exceeding the ADL.

6. The method of any of claims 3 to 5, further comprising creating the knowledge graph according to any of claims 1 or 2.

7. The method of any of the above claims, wherein a first node in the knowledge graph indicates a part of the vehicle that contains the damage, wherein a second node in the knowledge graph indicates a first type of damage, wherein a connection between the first node and the second node indicates a first ADL corresponding to the first type of damage.

8. The method of claim 7, wherein a third node in the knowledge graph is disposed between the first node and the second node, wherein the third node represents a location of the damage on the part of the vehicle.

9. The method of claim 7, wherein a third node in the knowledge graph indicates a second type of damage different from the second type of damage, wherein a connection between the first node and the third node indicates a second ADL corresponding to the second type of damage, which is different than the first ADL.

10. The method of claim 7, wherein a third node in the knowledge graph indicates notes for the part of the vehicle, wherein the notes contain at least one of proximity information between two damage instances on the part or proximity information between the damage and a particular location of the part.

11. The method of any of claims 3 to 10, whereby the damage is an external damage to an aircraft, the method further comprising taking a picture of the external damage in a gate environment.

12. The method of any of claims 3 to 11, the method further comprising generating repair instructions and repairing the damage based on the repair instructions.

13. The method of any of claims 3 to 12, whereby the 3D model is a multiple layered vehicle 3D model comprising at least 6 3D layers.

14. A non-transitory computer readable storage medium having program instructions embodied therewith, the program instructions executable by a processor to perform a method according to any of the above claims.

15. A computing device (102) including a processor (104) and memory (106) configured to perform a method according to any of claims 1 to 13.
